# EUROPEAN PATENT APPLICATION

(11) **EP 4 813 732 A1**
(43) Date of publication of application: **30.09.2026**
(21) Application number: 25166227.6
(22) Date of filing: 26.03.2025
(51) Int. Cl.: B60L 53/53, B60L 53/64, B60L 58/13

(54) **METHODS AND SYSTEMS FOR MANAGEMENT OF ELECTRICAL VEHICLE CHARGING**

(71) Applicant: Volvo Truck Corporation, 405 08 Göteborg (SE)
(72) Inventor: Biller, Claus, 412 62 Göteborg (SE); Berntsson, Johan, 423 50 Torslanda (SE)
(74) Representative: AWA Sweden AB

(57) **Abstract**

The present disclosure relates to a method (100, 100') of operating an Energy Management System, EMS, (10) for electrical vehicle charging, the method comprising sending (102) energy availability information (12) to a Charge Point Management System, CPMS, (20) wherein the energy availability information (12) comprises green energy information; and controlling (104) charging of a Battery Energy Storage System, BESS, (34) to a desired charge level based on a charging request (22) for an electrical vehicle charging received via the CPMS (20). The controlling of the charging comprises predicting green energy availability on the grid (40), and charging (106) the BESS (34) to the desired charge level based on the prediction of green energy availability and the charging request (22). The disclosure further relates to method (200) of operating a CPMS (20), and systems related thereto.

## Description

### TECHNICAL FIELD

The disclosure relates generally to electrical vehicle charging. In particular aspects, the disclosure relates to a method and system for management of electrical vehicle charging. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A problem for drivers of electrical vehicles (EV), especially heavy-duty vehicles such as trucks, arises when to book an EV charger in advance with guaranteed power in order to ensure a committed time of arrival at a destination of a transport mission. The same situation may be a problem for an operator of a charging site in guaranteeing power to the customers, in relation to the maximum available power at the charging site. Additionally, there is a demand from drivers and fleet owners to have control of the origin of the power used for the charging, in order to receive a desired amount of green energy. Consequently, there is need of a solution to how to enable electrical vehicle charging meeting the demands.

### SUMMARY

According to a first aspect of the disclosure, a method of operating an Energy Management System, EMS, for electrical vehicle charging is provided. The method comprising sending energy availability information to a Charge Point Management System, CPMS, wherein the energy availability information comprises green energy information; and controlling charging of a Battery Energy Storage System, BESS, to a desired charge level based on a charging request for an electrical vehicle charging received via the CPMS. The controlling of the charging comprises predicting green energy availability on the grid, and charging the BESS to the desired charge level based on the prediction of green energy availability and the charging request. The first aspect of the disclosure may seek to provide a system which may meet a request for charging an electrical vehicle, EV, in terms of desired power level and level of green energy. A technical benefit may include an efficient way of preparing a charging site for a charging of an EV that meets the request of the charging costumer by ensuring both that the desired power level and the desired level of green energy will be available at the requested point in time for charging. A driver or fleet manager responsible for planning charging of an EV during a drive or transport mission may by means of the disclosure be guaranteed the needed power and desired green energy content at a specified charging time. This may help the driver or fleet manager to ensure the commitment to the transport mission is met. For a charge point operator, responsible for the charge point at a charging site, the disclosure may provide a way of meeting the requests of the costumers both in terms of available power, which may go beyond the limits of the fuse of the site at certain points in time, and in terms of supply of green energy meeting the requests of the costumers. The control of charging of the BESS may comprise control of charging of one or more BESS'. The prediction of green energy availability on the grid may be made in order to optimize the charging of the BESS in terms of level of green energy needed to meet the charging request, and in terms of cost-efficiency for the operator of the charge point.

Optionally in some examples, including in at least one preferred example, predicting the green energy availability may further comprise using a machine learning model trained to predict the level of green energy available on the grid and to optimize the charging of the BESS for desired cost and/or green energy ratio. A technical benefit may include an efficient prediction of the availability of green energy on the grid, which may be used to optimize the charging of the BESS. The machine learning model may be trained on data regarding previous green energy availability on the grid, historic data of energy cost etc.

Optionally in some examples, including in at least one preferred example, the charging request may be based on the energy availability information and comprises a desired power level, a requested green energy level and/or a requested time for charging of an electrical vehicle. A technical benefit may include an efficient way in providing the EMS with the necessary information in order to be able to meet the request for charging an EV at requested charging occasion. The desired power level may comprise a specification of the number of kW that will be needed. The requested green energy level may be specified as a number of kW out of the desired power level that is requested to be provided as green energy. Alternatively, the requested green energy level may be provided as a percentage of the requested power level which is requested to constitute green energy. The requested time may be a point in time at which the charging of the EV is requested to be started, and thereby when the requested power level and green energy level need to be available.

Optionally in some examples, including in at least one preferred example, the method may further comprise charging the electrical vehicle, EV, for which the charging request was received using, at least partly, power from the BESS. A technical benefit may include an efficient way of meeting the charging request by charging the EV according to the request. The power used for the charging of the EV may partly or in full be supplied from the previously charged BESS. The charging of the BESS may further be supplied partly from the grid, and/or local power sources, such as local renewable power sources (solar or wind sources). In one example, the BESS may be charged with power having a green energy ratio higher than the green energy level requested in the charge request. The charging of the EV may be supplied both from the BESS and the grid in order to supply power meeting the requested green energy level. In another example, the BESS may have been charged with power having a green energy ratio corresponding to the charging request, providing that the EV may be charged from the BESS only. In another example, the power level requested in the charging request may be higher than the capacity of the BESS, providing that the charging of the EV may be supplied by both the BESS and the grid (and/or other local power sources) in order to meet the charging request.

Optionally in some examples, including in at least one preferred example, the charging request may comprise at least a requested time for charging of an electrical vehicle, and charging the BESS is performed at a point in time prior to the requested time for charging. A technical benefit may include an efficient planning of the charging of the BESS, in order to meet the charging request. Based on the time specified in the charging request, and e.g. other planned charges of EVs, available power, available green energy, the charging of the BESS may be planned to optimize the in terms of power availability, costs etc. at the same time as meeting the charging request.

Optionally in some examples, including in at least one preferred example, the energy availability information may comprise information of available power for electrical vehicle charging at one or more different points in time, and a level of green energy content in the available power at the one or more different points in time. A technical benefit may include an efficient planning and high capacity utilization of the available power at the charging site. The information of available power provided in the energy availability information may be based on the capacity of the charging site, provided by e.g. the connection to the grid, the BESS, and/or other local power sources. The energy availability information may further comprise information on how much the available power may be supplied as green energy. The level of green energy in the energy availability information may be based on estimations, predictions, or a predetermined level of the total available power.

According to a second aspect of the disclosure, a method of operating a Charge Point Management System, CPMS, for managing electrical vehicle charging is provided. The method comprising receiving energy availability information from an Energy Management System, EMS, for electrical vehicle charging, wherein the energy availability information comprises green energy information; based on the energy availability information, presenting charging request openings to a user interface; receiving, in response to the presented charging request openings, a charging request for an electrical vehicle charging; and sending the charging request to the EMS for control of charging of a Battery Energy Storage System, BESS, to a desired charge level based on the charging request. The second aspect of the disclosure may seek to provide an efficient management of charging requests for a charging point. A technical benefit may include matching available energy, information of which is received in the energy availability information, with requests for charging an EV in terms of desired power level and green energy level. A driver or fleet manager responsible for planning charging of an EV during a drive or transport mission may by means of the disclosure be guaranteed the needed power and desired green energy content at a specified charging time. This may help the driver or fleet manager to ensure the commitment to the transport mission is met.

Optionally in some examples, including in at least one preferred example, the charging request may comprise a desired power level, a requested green energy level and/or a requested time for charging of an electrical vehicle. A technical benefit may include A technical benefit may include an efficient planning of the charging of the BESS, in order to meet the charging request. Based on the time specified in the charging request, and e.g. other planned charges of EVs, available power, available green energy, the charging of the BESS may be planned to optimize the in terms of power availability, costs etc. at the same time as meeting the charging request.

Optionally in some examples, including in at least one preferred example, the energy availability information may comprise information of available power for electrical vehicle charging at one or more different points in time, and a level of green energy content in the available power at the one or more different points in time. A technical benefit may include an efficient planning and high capacity utilization of the available power at the charging site. The information of available power provided in the energy availability information may be based on the capacity of the charging site, provided by e.g. the connection to the grid, the BESS, and/or other local power sources. The energy availability information may further comprise information on how much the available power may be supplied as green energy. The level of green energy in the energy availability information may be based on estimations, predictions, or a predetermined level of the total available power.

According to a third aspect of the disclosure, an Energy Management System, EMS, for electrical vehicle charging is provided, the EMS comprising processing circuitry configured to send energy availability information to a Charge Point Management System, CPMS, wherein the energy availability information comprises green energy information; and control charging of a Battery Energy Storage System, BESS, to a desired charge level based on a charging request for an electrical vehicle charging received via the CPMS; wherein the control of the charging comprises predicting green energy availability on the grid, and control the charging of the BESS to the desired charge level based on the prediction of green energy availability and the charging request. The second aspect of the disclosure may seek to provide a system which may meet a request for charging an electrical vehicle, EV, in terms of desired power level and level of green energy. A technical benefit may include an efficient way of preparing a charging site for a charging of an EV that meets the request of the charging costumer by ensuring both that the desired power level and the desired level of green energy will be available at the requested point in time for charging. The processing circuitry of the EMS may comprise a processor configured to perform the related tasks. The processing circuitry may further comprise a memory comprising a computer program configured to, when executed by the processor, cause the processing circuitry to perform the related tasks. A driver or fleet manager responsible for planning charging of an EV during a drive or transport mission may by means of the disclosure be guaranteed the needed power and desired green energy content at a specified charging time. This may help the driver or fleet manager to ensure the commitment to the transport mission is met. For a charge point operator, responsible for the charge point at a charging site, the disclosure may provide a way of meeting the requests of the costumers both in terms of available power, which may go beyond the limits of the fuse of the site at certain points in time, and in terms of supply of green energy meeting the requests of the costumers. The control of charging of the BESS may comprise control of charging of one or more BESS'. The prediction of green energy availability on the grid may be made in order to optimize the charging of the BESS in terms of level of green energy needed to meet the charging request, and in terms of cost-efficiency for the operator of the charge point.

Optionally in some examples, including in at least one preferred example, the processing circuitry may be configured to, for predicting green energy availability, use a machine learning model trained to predict the level of green energy on the grid and to optimize the charging of the BESS for best cost and/or green energy ratio. A technical benefit may include an efficient prediction of the availability of green energy on the grid, which may be used to optimize the charging of the BESS. The machine learning model may be trained on data regarding previous green energy availability on the grid, historic data of energy cost etc.

Optionally in some examples, including in at least one preferred example, the charging request may be based on the energy availability information and comprises a desired power level, a requested green energy level and/or a requested time for charging of an electrical vehicle. A technical benefit may include an efficient way in providing the EMS with the necessary information in order to be able to meet the request for charging an EV at requested charging occasion. The desired power level may comprise a specification of the number of kW that will be needed. The requested green energy level may be specified as a number of kW out of the desired power level that is requested to be provided as green energy. Alternatively, the requested green energy level may be provided as a percentage of the requested power level which is requested to constitute green energy. The requested time may be a point in time at which the charging of the EV is requested to be started, and thereby when the requested power level and green energy level need to be available.

Optionally in some examples, including in at least one preferred example, the processing circuitry may further be configured to control charging of the electrical vehicle for which the charging request was received using, at least partly, power from the BESS. A technical benefit may include an efficient way of meeting the charging request by charging the EV according to the request. The power used for the charging of the EV may partly or in full be supplied from the previously charged BESS. The charging of the BESS may further be supplied partly from the grid, and/or local power sources, such as local renewable power sources (solar or wind sources). In one example, the BESS may be charged with power having a green energy ratio higher than the green energy level requested in the charge request. The charging of the EV may be supplied both from the BESS and the grid in order to supply power meeting the requested green energy level. In another example, the BESS may have been charged with power having a green energy ratio corresponding to the charging request, providing that the EV may be charged from the BESS only. In another example, the power level requested in the charging request may be higher than the capacity of the BESS, providing that the charging of the EV may be supplied by both the BESS and the grid (and/or other local power sources) in order to meet the charging request.

Optionally in some examples, including in at least one preferred example, the charging request may comprise at least a requested time for charging of an electrical vehicle, and the processing circuitry may be configured to control the charging of the BESS to charge at a point in time prior to the requested time for charging. A technical benefit may include an efficient planning of the charging of the BESS, in order to meet the charging request. Based on the time specified in the charging request, and e.g. other planned charges of EVs, available power, available green energy, the charging of the BESS may be planned to optimize the in terms of power availability, costs etc. at the same time as meeting the charging request.

Optionally in some examples, including in at least one preferred example, the energy availability information may comprise information of available power for electrical vehicle charging at one or more different points in time, and a level of green energy content in the available power at the one or more different points in time. A technical benefit may include an efficient planning and high capacity utilization of the available power at the charging site. The information of available power provided in the energy availability information may be based on the capacity of the charging site, provided by e.g. the connection to the grid, the BESS, and/or other local power sources. The energy availability information may further comprise information on how much the available power may be supplied as green energy. The level of green energy in the energy availability information may be based on estimations, predictions, or a predetermined level of the total available power.

According to a fourth aspect of the disclosure, a Charge Point Management System, CPMS, for managing electrical vehicle charging is provided. The CPMS comprising processing circuitry configured to receive energy availability information from an Energy Management System, EMS, for electrical vehicle charging, wherein the energy availability information comprises green energy information; based on the energy availability information, present charging request openings to a user interface; receive, in response to the presented charging request openings, a charging request for an electrical vehicle; and send the charging request to the EMS for control of charging of a Battery Energy Storage System, BESS, to a desired charge level based on the charging request. The second aspect of the disclosure may seek to provide an efficient management of charging requests for a charging point. A technical benefit may include matching available energy, information of which is received in the energy availability information, with requests for charging an EV in terms of desired power level and green energy level. The processing circuitry of the CPMS may comprise a processor configured to perform the related tasks of the processing circuitry. The processing circuitry may further comprise a memory comprising a computer program configured to, when executed by the processor, cause the processing circuitry to perform the related tasks. A driver or fleet manager responsible for planning charging of an EV during a drive or transport mission may by means of the disclosure be guaranteed the needed power and desired green energy content at a specified charging time. This may help the driver or fleet manager to ensure the commitment to the transport mission is met.

Optionally in some examples, including in at least one preferred example, the charging request may comprise a desired power level, a requested green energy level and/or a requested time for charging of an electrical vehicle. A technical benefit may include A technical benefit may include an efficient planning of the charging of the BESS, in order to meet the charging request. Based on the time specified in the charging request, and e.g. other planned charges of EVs, available power, available green energy, the charging of the BESS may be planned to optimize the in terms of power availability, costs etc. at the same time as meeting the charging request.

Optionally in some examples, including in at least one preferred example, the energy availability information may comprise information of available power for electrical vehicle charging at one or more different points in time, and a level of green energy content in the available power at the one or more different points in time. A technical benefit may include an efficient planning and high capacity utilization of the available power at the charging site. The information of available power provided in the energy availability information may be based on the capacity of the charging site, provided by e.g. the connection to the grid, the BESS, and/or other local power sources. The energy availability information may further comprise information on how much the available power may be supplied as green energy. The level of green energy in the energy availability information may be based on estimations, predictions, or a predetermined level of the total available power.

According to a fifth aspect of the disclosure, an electrical vehicle charging system is provided, comprising an Energy Management System, EMS, according to any one of the embodiments disclosed herein, a Charge Point Management System, CPMS, according to any one of the embodiments disclosed herein, a Battery Energy Storage System, BESS, and one or more electrical vehicle chargers configured to be connected to an electrical vehicle for charging thereof. The fifth aspect of the disclosure may seek to provide a complete system of managing EV charging based available power and green energy, and a charging request. A technical benefit may include an efficient management that utilizes the available power and meets the charging request in terms of green energy and power level.

According to a sixth aspect of the disclosure, a method of operating an electrical vehicle charging system is provided, comprising an Energy Management System, EMS, according to any one of the embodiments disclosed herein, and a Charge Point Management System, CPMS, according to any one of the embodiments disclosed herein, the method comprising a method of operating the EMS according to any one of the embodiments disclosed herein, and a method of operating the CPMS according to any one of the embodiments disclosed herein. The sixth aspect of the disclosure may seek to provide a complete system of managing EV charging based available power and green energy, and a charging request. A technical benefit may include an efficient management that utilizes the available power and meets the charging request in terms of green energy and power level.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary system according to an example.
**FIG. 2** is an exemplary system illustrating a communication flow according to an example.
**FIG. 3a** is an exemplary EMS according to an example.
**FIG. 3b** is an exemplary EMS according to an example.
**FIG. 4a** is an exemplary CPMS according to an example.
**FIG. 4b** is an exemplary CPMS according to an example.
**FIG. 5** is an exemplary flowchart of a method according to an example.
**FIG. 6** is an exemplary flowchart of a method according to an example.
**FIG. 7** is an exemplary flowchart of a method according to an example.

### DETAILED DESCRIPTION

The detailed description set forth below provides information and examples of the disclosed technology with sufficient detail to enable those skilled in the art to practice the disclosure.

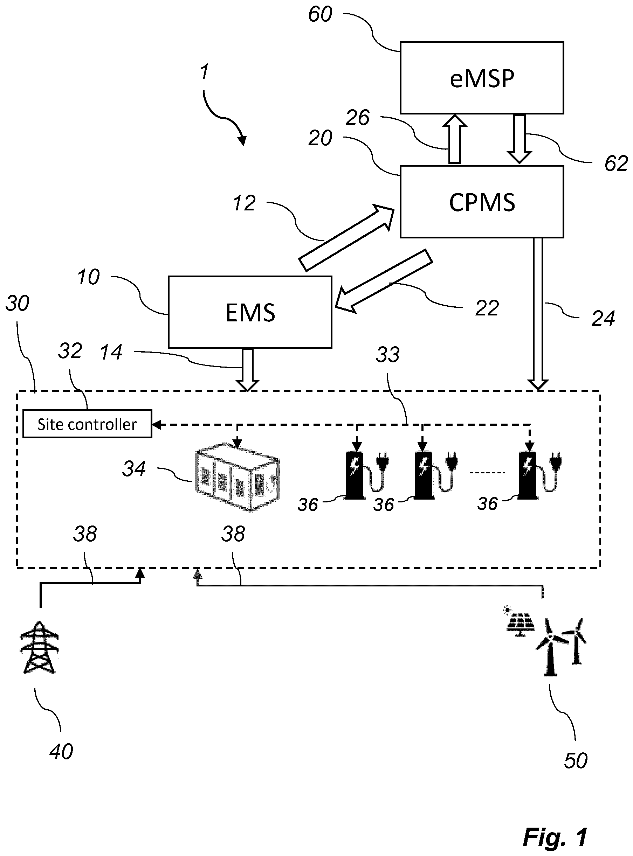

Fig. 1 is an exemplary system 1 for managing charging of electrical vehicles, EVs, according to an example. The system 1 may comprise an Energy Management System, EMS, 10 and a Charge Point Management System, CPMS, 20. The EMS 10 and the CPMS 20 may be used for managing the charging of EVs at a charging site 30.

The charging site 30 may comprise a plurality of EV chargers 36 and one or more Battery Energy Storage Systems, BESS, 34. The charging site 30 may further comprise a site controller 32. The site controller 32 may be configured to monitor and/or control the charging of the BESS 34 and the charging of EVs at the EV chargers 36. The site controller 32 may further receive data from the BESS 34 and/or the EV chargers 36. The communication between the site controller 32 and the BESS 34 and EV chargers 36 may be via a wired or wireless connection 33.

The charging site 30 may be connected via power lines 38 to a power grid 40 and/or local power sources 50 such as solar panels and wind turbines. The local power sources 50 may be green energy power sources. The BESS 34 and/or the EV chargers 36 may be connected to the power lines 38. The site controller 32 may control the charging of the BESS 34 and at the EV chargers 36 via the connections to the power lines 38.

The BESS 32 may supply power to the EV chargers 36. The site controller 32 may control the supply of power from the BESS 34 to the EV chargers 36.

The EMS 10 controls the charging of the BESS 32 based on a charging request 22 for an EV charging. The EMS 10 may receive the charging request 22 from the CPMS 20. The control of the charging of the BESS 34 by the EMS 10 may be performed via the site controller 32. In some examples the EMS 10 may comprise the functionality of the site controller 32. The EMS 10 may send a control signal 14 to the site controller 32 for the charging of the BESS 34.

The charging request 22 may comprise a desired power level, a requested green energy level and/or a requested time for charging of an EV. A driver of an EV and/or a fleet manager of an EV fleet may plan for the charging of an EV based on a transport mission for the EV. The charging request 22 sent may comprise an estimated time at which it will be desired to charge the EV. The charging request 22 may further comprise a desired power level for the charging of the EV. When planning the transport mission, it may be determined that a certain need for charging, to a desired power level, will be needed at a certain point in time. Based on such determination, the charging request 22 may be sent to the EMS 10.

Besides the power level and charging time, the charging request 22 may comprise a requested green energy level. The green energy level may represent a level or ratio of green energy of the total power requested for the EV charging. The driver or fleet manager may have a request of charging the EV with a certain amount of green energy. The charging request may thereby comprise such request for green energy level in order to receive such amount of green energy.

By green energy, it may be meant energy from renewable energy sources such as solar, wind, hydro. It may further include energy with no or low CO₂ impact, such as nuclear power.

The charging of the BESS 34 may be controlled in order to optimize the available power at the requested time for charging the EV, both in terms of available power level and level of green energy. In order to optimize the charging of the BESS 34 for a requested EV charging, the EMS 10 is configured to predict green energy availability on the grid. The optimization may be made in terms of cost and availability of the requested amount of green energy. The prediction may be made using a machine learning model trained to predict the level of green energy available on the grid 40 and/or from local green energy sources 50 for optimization of the charging of the BESS for a desired cost and/or green energy ratio. Based on previous data of level of available green energy on the grid 40, and/or supply of green energy from the local green energy source 50, the machine learning model may be trained to predict the availability of green energy for the charging of the BESS 34 to enable charging according to the charging request, in the most cost-efficient way. The machine learning model may further be trained on data from external sources, such as weather data and/or electrical grid data. The machine learning model may further be trained on data collected via one or more sensors at the charging site. Such data collected via the one or more sensors may be previously stored data and/or presently read data. Such sensor may for instance be a weather sensor, a sensor measuring an electrical parameter at the charging site, and/or other environmental sensor at the charging site 30. For a charge point operator, responsible for the charge point at a charging site 30, the system 1 may provide a way of meeting the requests of the costumers both in terms of available power, which may go beyond the limits of the fuse of the site at certain points in time, and in terms of supply of green energy meeting the requests of the costumers.

The BESS 10 may be used during charging of EVs at the EV chargers 36 both for the purpose of increasing the available amount of power at the charging site 30, and to ensure a requested level of available green energy at the charging site 30. Based on the charging request 22, the BESS 10 may thereby be charged in advance of the requested time of charging in order to have the requested power level and green energy level available at the requested time. The reception of the charging request 22 may trigger a charging of the BESS 34 or trigger a planning for charging the BESS 34.

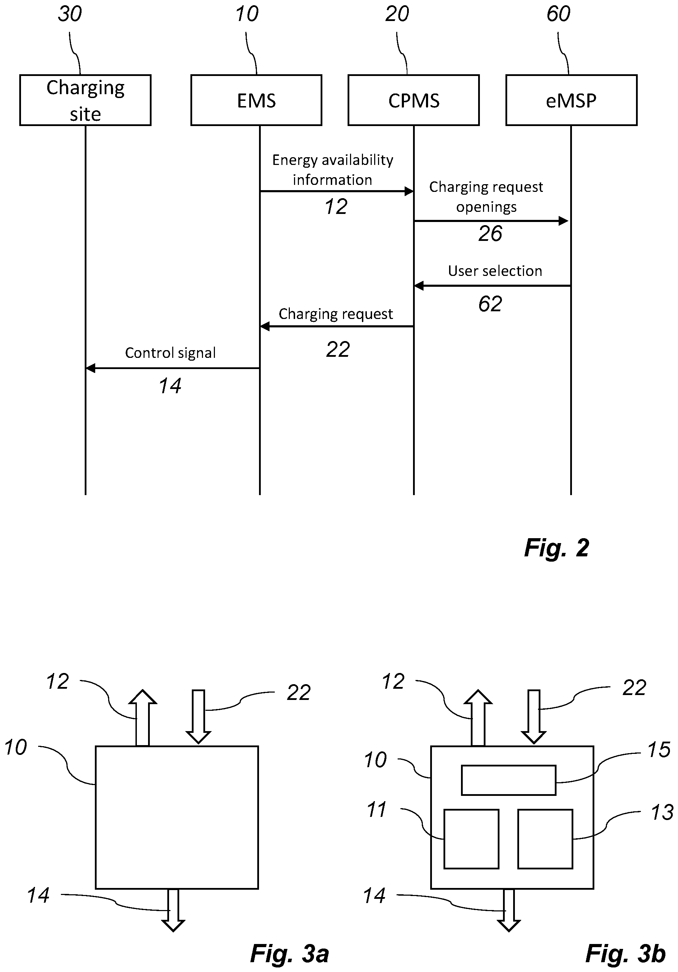

The charging request 22 may be received in response to energy availability information 12 being sent by the EMS 10 to the CPMS 20 (see further fig. 2). The energy availability information 12 may be used by the CPMS to present available charging request openings 26 to a user interface, such as a Charge Point Interface, CPI. Via the user interface, a user, such as a driver or a fleet manager, may select a charging request opening 26 for charging of an EV, whereby a charging request 22 is sent to the EMS 10. The charging request 22 sent to the EMS 10 may be based on a user selection 62 based at least partly on a charging request opening. The energy availability information 12 may comprise, for different points in time, available power for EV charging and/or a level of green energy content in the available power. The user interface may be provided via an eMobility Service Provider, eMSP, 60. The CPMS 20 may supply the charging request openings 26 to the eMSP 60. Via the eMSP 60, a user may make a user selection 62 which may be distributed to the CPMS 20. The user selection 62 may further comprise a desired green energy level for the requested charging. The charging request 22 sent to the EMS 10 may be based on the user selection 62. The communication between the CPMS 20 and the eMSP 60 may further comprise a cost determination made by the CPMS 20 based on the charging request 22, i.e. based on the selection made by the user of desired power level, point in time and/or green energy level. The determined cost of the requested charging may be communicated to the user via the eMSP 60.

The CPMS 20 may send an authorization 24 directly to the charging site. The authorization 24 may be based on the charging request 22 and may be sent to verify authorization of EV charging according to the charging request 22. The authorization may be sent according to a protocol, such as Open Charge Point Protocol, OCPP.

The configuration of the system 1 according to an example is further illustrated in fig. 2. According to the example, the EMS 10 may send energy availability information 12 to the CPMS 20. The energy availability information 12 may comprise, for different points in time, available power for EV charging and/or a level of green energy content in the available power. The CPMS 20 may present charging request openings 26 to a user via e.g. the eMSP 60 based on the energy availability information 12. The charging request openings 26 may be presented via a user interface, such as a Charge Point Interface, CPI, or Open Charge Point Interface, OCPI. For instance, an OCPI may be used for information exchange between a charge point operator and the eMSP 60.

A user, such as a driver or a fleet manager, may select a charging request opening 26 in order to provide a request for EV charging. The user selection 62 may further comprise a desired green energy level for the requested charging. The user selection 62 may be sent by the eMSP to the CPMS 20. Based thereon, the CPMS 20 may send the charging request 22 to the EMS 10. In response to the charging request 22, the EMS 10 may send control signals 14 to the charging site 30 for charging of the BESS 34. The communication between the CPMS 20 and the eMSP 60 may further comprise a cost determination made by the CPMS 20 based on the charging request 22, i.e. based on the selection made by the user of desired power level, point in time and/or green energy level. The determined cost of the requested charging may be communicated to the user via the eMSP 60. The cost communication may be provided via the interface. The control signals 14 may further be based on a prediction of green energy availability on the grid 40 made by the EMS 10. The prediction of green energy availability on the grid 40 may be made in order to optimize the charging of the BESS 34 in terms of level of green energy needed to meet the charging request, and in terms of cost-efficiency for the operator of the charging site 30. The prediction may comprise using a machine learning model trained to predict the level of green energy available on the grid and to optimize the charging of the BESS 34 for desired cost and/or green energy ratio. The machine learning model may be trained on data regarding previous green energy availability on the grid 40, historic data of energy cost etc.

The communication between the CPMS 20 and the EMS 10 may be performed according to a protocol, such as Open Smart Charging Protocol, OSCP. This may apply to the transmission of energy availability information 12 from the EMS to the CPMS 20, and/or to the transmission of the charging request 22 from the CPMS 20 to the EMS 10.

The control signal 14 sent from the EMS 10 to the charging site 30 may be performed according to a protocol, such as Open Automated Demand Response, OpenADR.

Fig. 3a schematically illustrates an EMS 10 configured to send energy availability information 12 to the CPMS 20, and to receive a charging request 22. The EMS 10 is further configured to control charging of the BESS 34, which charging may be controlled by means of sending control signals 14 to the charging site 30. The energy availability information 12 may comprise, for different points in time, available power for EV charging and/or a level of green energy content in the available power. The charging request 22 may at least partly be based on the energy availability information 12. The control signals 14 may further be based on a prediction of green energy availability on the grid 40 made by the EMS 10. The prediction of green energy availability on the grid may be made in order to optimize the charging of the BESS in terms of level of green energy needed to meet the charging request, and in terms of cost-efficiency for the operator of the charge point. The prediction performed by the processor 11 of the green energy availability may comprise using a machine learning model trained to predict the level of green energy available on the grid and to optimize the charging of the BESS 34 for desired cost and/or green energy ratio. The machine learning model may be trained on data regarding previous green energy availability on the grid 40, historic data of energy cost etc.

Fig. 3b schematically illustrates the EMS 10 comprising a processor 11 and a memory 13 according to an example. The memory 13 may comprise instructions which, when executed by the processor 11, may cause the processor 11 to operate according to the functions of the EMS 10 as disclosed herein. The processor 11 may be configured to send energy availability information 12 to the CPMS 20 via a communication circuit 15 also provided in the EMS 10. The energy availability information 12 may comprise, for different points in time, available power for EV charging and/or a level of green energy content in the available power. The communication circuit 15 may be configured for communication to and from the EMS 10. The processor 11 may further be configured to, via the communication circuit 15, receive the charging request 22. The charging request 22 may at least partly be based on the energy availability information 12. Based on the charging request 22, the processor 11 may be configured to determine and send, via the communication circuit 15, one or more control signals 14 to the charging site 30, such as to the site controller 32. The processor 11 may be configured to predict green energy availability on the grid 40. The prediction of green energy availability on the grid may be made in order to optimize the charging of the BESS in terms of level of green energy needed to meet the charging request, and in terms of cost-efficiency for the operator of the charge point. The prediction performed by the processor 11 of the green energy availability may comprise using a machine learning model trained to predict the level of green energy available on the grid and to optimize the charging of the BESS 34 for desired cost and/or green energy ratio. The machine learning model may be trained on data regarding previous green energy availability on the grid 40, historic data of energy cost etc.

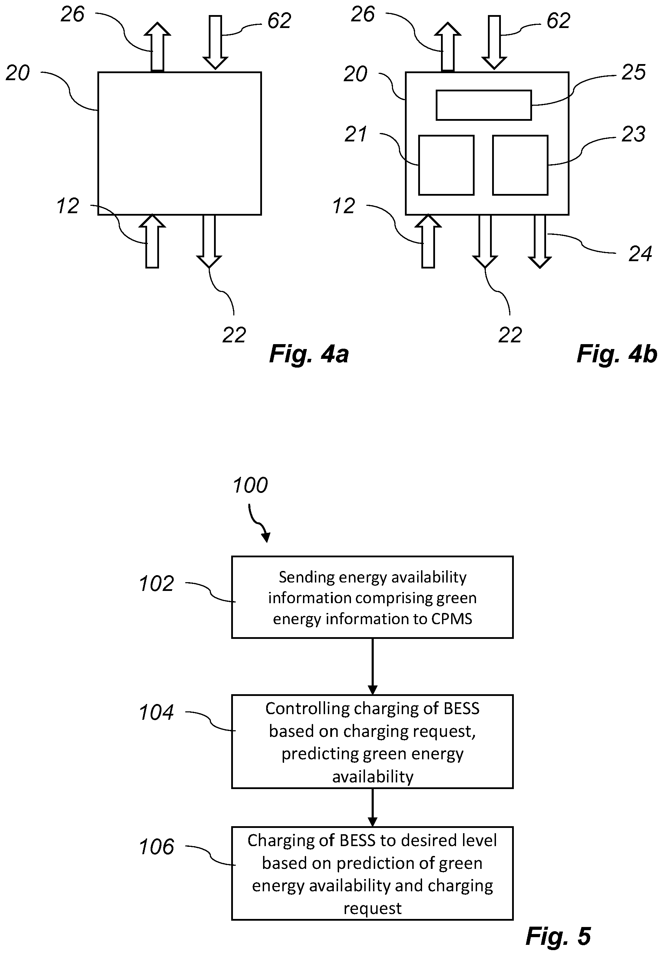

Fig. 4a schematically illustrates a CPMS 20 configured to receive energy availability information 12 from the EMS 10, and to present charging request openings 26 to a user interface, such as via an eMSP 60. The energy availability information 12 may comprise, for different points in time, available power for EV charging and/or a level of green energy content in the available power. The CPMS 20 may receive a user selection 62 of a charging request based on the presented charging request openings 26. A user, such as a driver or a fleet manager, may select a charging request opening 26 in order to provide a request for EV charging. The user selection 62 may comprise a desired power level, a requested green energy level, and/or a requested time for charging, based at least partly on the charging request openings 26. The user selection 62 may be sent by the eMSP to the CPMS 20. Based thereon, the CPMS 20 may be configured to send the charging request 22 to the EMS 10. The charging request 22 is then sent to the EMS 10. The CPMS 20 may send an authorization 24 directly to the charging site. The authorization 24 may be based on the charging request 22 and may be sent to verify authorization of EV charging according to the charging request 22.

Fig. 4b schematically illustrates the CPMS 20 comprising a processor 21 and a memory 23 according to an example. The memory 23 may comprise instructions which, when executed by the processor 21, may cause the processor 21 to operate according to the functions of the CPMS 20 as disclosed herein. The processor 21 may be configured to send a charging request 22 to the EMS 10 via a communication circuit 25 also provided in the CPMS 20. The communication circuit 25 may be configured for communication to and from the CPMS 20. The processor 21 may further be configured to, via the communication circuit 25, receive the energy availability information 12 from the EMS 10. The processor 21 may be configured to communicate, via the communication circuit 25, with the eMSP 60 for presenting the charging request openings 26 to a user. A user, such as a driver or a fleet manager, may select a charging request opening 26 in order to provide a request for EV charging. The user selection 62 may comprise a desired power level, a requested green energy level, and/or a requested time for charging, based at least partly on the charging request openings 26. The user selection 62 may be sent by the eMSP to the CPMS 20. Based thereon, the processor 21 and the communication circuit 25 of the CPMS 20 may be configured to send the charging request 22 to the EMS 10.The processor 21 may be configured to send, via the communication circuit 25, the authorization 24 to the charging site 30. The authorization 24 may be based on the charging request 22 and may be sent to verify authorization of EV charging according to the charging request 22.

Fig. 5 illustrates a method 100 of operating an EMS 10 for EV charging according to an example. The method 100 comprises sending 102 energy availability information 12 to a CPMS 20, wherein the energy availability information 12 comprises green energy information. The method 100 further comprises controlling charging of a BESS 34 to a desired charge level based on a charging request 22 for an EV charging received via the CPMS 20, wherein the controlling comprises predicting 104 green energy availability on the grid. The method 100 further comprises charging 106 the BESS to the desired charge level based on the prediction of green energy availability and the charging request 22.

The step of predicting green energy availability may comprise using a machine learning model trained to predict the level of green energy available on the grid 40 and to optimize the charging of the BESS for desired cost and/or green energy ratio. The charging request 22 may be based on the energy availability information and may comprise a desired power level, a requested green energy level and/or a requested time for charging of an EV. The charging request 22 may comprise at least one requested time for charging an EV, and the charging of the BESS 34 may be performed at a point in time prior to the requested time for charging. The energy availability information 12 may comprise information of available power for EV charging at one or more different points in time, and a level of green energy content in the available power at the one or more different points in time.

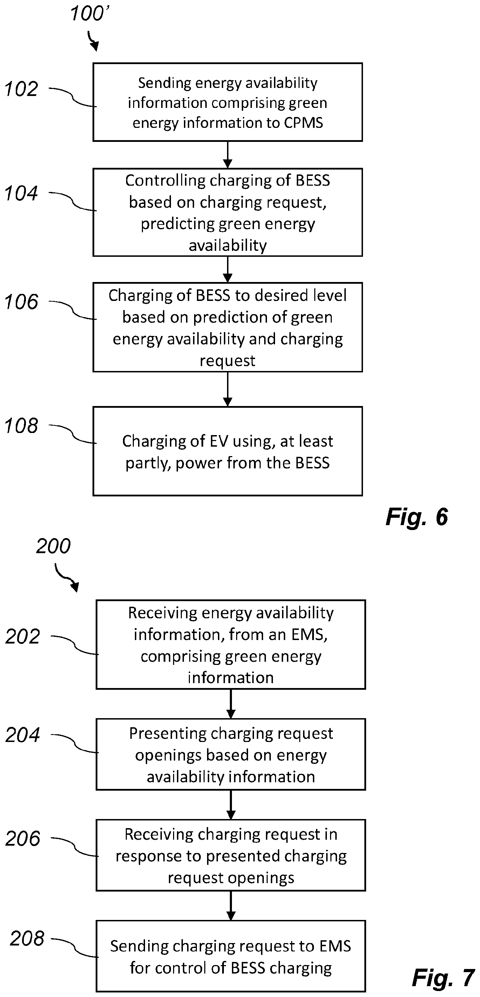

Fig. 6 illustrates an alternative method 100' of the method 100 of fig. 4, in which the method 100' further comprises a step of charging 108 an EV using, at least partly, power from the BESS 34.

Fig. 7 illustrates a method 200 of operating a CPMS 20 for managing EV charging, wherein the method 200 comprises receiving 202 energy availability information 12 from the EMS 10, the energy availability information 12 comprising green energy information, presenting 204 charging request openings based on the energy availability information, receiving 206 a charging request 22 in response to the presented charging request openings, and sending 208 the charging request 22 to the EMS 10 for control of charging the BESS 34 to a desired charge level based on the charging request 22. The charging request 22 may comprise a desired power level, a requested green energy level, and/or a requested time for charging of an EV. The energy availability information 12 may comprise information of available power for EV charging at one or more different points in time, and a level of green energy content in the available power at the one or more different points in time.

Example 1: A method of operating an Energy Management System, EMS, for electrical vehicle charging, the method comprising: sending energy availability information to a Charge Point Management System, CPMS, wherein the energy availability information comprises green energy information; and controlling charging of a Battery Energy Storage System, BESS, to a desired charge level based on a charging request for an electrical vehicle charging received via the CPMS, wherein controlling the charging comprises: predicting green energy availability on the grid, and charging the BESS to the desired charge level based on the prediction of green energy availability and the charging request.

Example 2: The method according to example 1, wherein predicting the green energy availability further comprises: using a machine learning model trained to predict the level of green energy available on the grid and to optimize the charging of the BESS for desired cost and/or green energy ratio.

Example 3: The method according to example 1 or 2, wherein the charging request is based on the energy availability information and comprises a desired power level, a requested green energy level and/or a requested time for charging of an electrical vehicle.

Example 4: The method according to any one of the preceding examples, further comprising: charging the electrical vehicle for which the charging request was received using, at least partly, power from the BESS.

Example 5: The method according to any one of the preceding examples, wherein the charging request comprises at least a requested time for charging of an electrical vehicle, and charging the BESS is performed at a point in time prior to the requested time for charging.

Example 6: The method according to any one of the preceding examples, wherein the energy availability information comprises information of available power for electrical vehicle charging at one or more different points in time, and a level of green energy content in the available power at the one or more different points in time.

Example 7: A method of operating a Charge Point Management System, CPMS, for managing electrical vehicle charging, the method comprising: receiving energy availability information from an Energy Management System, EMS, for electrical vehicle charging, wherein the energy availability information comprises green energy information; based on the energy availability information, presenting charging request openings to a user interface; receiving, in response to the presented charging request openings, a charging request for an electrical vehicle charging; and sending the charging request to the EMS for control of charging of a Battery Energy Storage System, BESS, to a desired charge level based on the charging request.

Example 8: The method according to example 7, wherein the charging request comprises a desired power level, a requested green energy level and/or a requested time for charging of an electrical vehicle.

Example 9: The method according to any one of examples 7-8, wherein the energy availability information comprises information of available power for electrical vehicle charging at one or more different points in time, and a level of green energy content in the available power at the one or more different points in time.

Example 10: An Energy Management System, EMS, for electrical vehicle charging, the EMS comprising processing circuitry configured to: send energy availability information to a Charge Point Management System, CPMS, wherein the energy availability information comprises green energy information; control charging of a Battery Energy Storage System, BESS, to a desired charge level based on a charging request for an electrical vehicle charging received via the CPMS; wherein the control of the charging comprises: predicting green energy availability on the grid, and control the charging of the BESS to the desired charge level based on the prediction of green energy availability and the charging request.

Example 11: The EMS according to example 10, wherein the processing circuitry is configured to, for predicting green energy availability, use a machine learning model trained to predict the level of green energy on the grid and to optimize the charging of the BESS for best cost and/or green energy ratio.

Example 12: The EMS according to example 10 or 11, wherein the charging request is based on the energy availability information and comprises a desired power level, a requested green energy level and/or a requested time for charging of an electrical vehicle.

Example 13: The EMS according to any one of examples 10-12, wherein the processing circuitry is further configured to control charging of the electrical vehicle for which the charging request was received using, at least partly, power from the BESS.

Example 14: The EMS according to any one of examples 10-13, wherein the charging request comprises at least a requested time for charging of an electrical vehicle, and wherein the processing circuitry is configured to control the charging of the BESS to charge at a point in time prior to the requested time for charging.

Example 15: The method according to any one of examples 10-14, wherein the energy availability information comprises information of available power for electrical vehicle charging at one or more different points in time, and a level of green energy content in the available power at the one or more different points in time.

Example 16: A Charge Point Management System, CPMS, for managing electrical vehicle charging, the CPMS comprising processing circuitry configured to: receive energy availability information from an Energy Management System, EMS, for electrical vehicle charging, wherein the energy availability information comprises green energy information; based on the energy availability information, present charging request openings to a user interface; receive, in response to the presented charging request openings, a charging request for an electrical vehicle; send the charging request to the EMS for control of charging of a Battery Energy Storage System, BESS, to a desired charge level based on the charging request.

Example 17: The method according to example 16, wherein the charging request comprises a desired power level, a requested green energy level and/or a requested time for charging of an electrical vehicle.

Example 18: The method according to any one of examples 16-17, wherein the energy availability information comprises information of available power for electrical vehicle charging at one or more different points in time, and a level of green energy content in the available power at the one or more different points in time.

Example 19: An electrical vehicle charging system comprising an Energy Management System, EMS, according to any one of examples 10-15, a Charge Point Management System, CPMS, according to any one of examples 16-18, a Battery Energy Storage System, BESS, and one or more electrical vehicle chargers configured to be connected to an electrical vehicle for charging thereof.

Example 20: A method of operating an electrical vehicle charging system comprising an Energy Management System, EMS, according to any one of examples 10-15, and a Charge Point Management System, CPMS, according to any one of examples 16-18, the method comprising a method of operating the EMS according to any one of examples 1-6, and a method of operating the CPMS according to any one of examples 7-9.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A method (100, 100') of operating an Energy Management System, EMS, (10) for electrical vehicle charging, the method comprising:
sending (102) energy availability information (12) to a Charge Point Management System, CPMS, (20) wherein the energy availability information (12) comprises green energy information; and
controlling (104) charging of a Battery Energy Storage System, BESS, (34) to a desired charge level based on a charging request (22) for an electrical vehicle charging received via the CPMS (20), wherein controlling the charging comprises:
predicting green energy availability on the grid (40), and
charging (106) the BESS (34) to the desired charge level based on the prediction of green energy availability and the charging request (22).

2. The method (100, 100') according to claim 1, wherein predicting the green energy availability further comprises:
using a machine learning model trained to predict the level of green energy available on the grid (40) and to optimize the charging of the BESS (34) for desired cost and/or green energy ratio.

3. The method (100, 100') according claim 1 or 2, wherein the charging request (22) is based on the energy availability information (12) and comprises a desired power level, a requested green energy level and/or a requested time for charging of an electrical vehicle.

4. The method (100, 100') according to any one of the preceding claims, further comprising: charging (108) the electrical vehicle for which the charging request (22) was received using, at least partly, power from the BESS (34).

5. The method (100, 100') according to any one of the preceding claims, wherein the charging request (22) comprises at least a requested time for charging of an electrical vehicle, and
charging the BESS (34) is performed at a point in time prior to the requested time for charging.

6. The method (100, 100') according to any one of the preceding claims, wherein the energy availability information (12) comprises information of available power for electrical vehicle charging at one or more different points in time, and a level of green energy content in the available power at the one or more different points in time.

7. A method (200) of operating a Charge Point Management System, CPMS, (20) for managing electrical vehicle charging, the method comprising:
receiving (202) energy availability information (12) from an Energy Management System, EMS, (10) for electrical vehicle charging, wherein the energy availability information (12) comprises green energy information;
based on the energy availability information, presenting (204) charging request openings (26) to a user interface;
receiving (206), in response to the presented charging request openings (26), a charging request (22) for an electrical vehicle charging; and
sending (208) the charging request (22) to the EMS (10) for control of charging of a Battery Energy Storage System, BESS, (34) to a desired charge level based on the charging request (22).

8. The method (200) according to claim 7, wherein the charging request (22) comprises a desired power level, a requested green energy level and/or a requested time for charging of an electrical vehicle.

9. The method (200) according to any one of claims 7-8, wherein the energy availability information (12) comprises information of available power for electrical vehicle charging at one or more different points in time, and a level of green energy content in the available power at the one or more different points in time.

10. An Energy Management System, EMS, (10) for electrical vehicle charging, the EMS comprising processing circuitry configured to:
send energy availability information (12) to a Charge Point Management System, CPMS, (20) wherein the energy availability information comprises green energy information;
control charging of a Battery Energy Storage System, BESS, (34) to a desired charge level based on a charging request (22) for an electrical vehicle charging received via the CPMS (20);
wherein the control of the charging comprises:
predicting green energy availability on the grid, and
control the charging of the BESS (34) to the desired charge level based on the prediction of green energy availability and the charging request (22).

11. The EMS (10) according to claim 10, wherein the processing circuitry is configured to, for predicting green energy availability, use a machine learning model trained to predict the level of green energy on the grid and to optimize the charging of the BESS (34) for best cost and/or green energy ratio.

12. The EMS (10) according claim 10 or 11, wherein the charging request (22) is based on the energy availability information (12) and comprises a desired power level, a requested green energy level and/or a requested time for charging of an electrical vehicle.

13. The EMS (10) according to any one of claims 10-12, wherein the processing circuitry is further configured to control charging of the electrical vehicle for which the charging request (22) was received using, at least partly, power from the BESS (34).

14. The EMS (10) according to any one of claims 10-13, wherein the charging request (22) comprises at least a requested time for charging of an electrical vehicle, and wherein the processing circuitry is configured to control the charging of the BESS (34) to charge at a point in time prior to the requested time for charging.

15. The EMS (10) according to any one of claims 10-14, wherein the energy availability information (12) comprises information of available power for electrical vehicle charging at one or more different points in time, and a level of green energy content in the available power at the one or more different points in time.

16. A Charge Point Management System, CPMS, (20) for managing electrical vehicle charging, the CPMS comprising processing circuitry configured to:
receive energy availability information (12) from an Energy Management System, EMS, (10) for electrical vehicle charging, wherein the energy availability information comprises green energy information;
based on the energy availability information, present charging request openings (26) to a user interface;
receive, in response to the presented charging request openings (26), a charging request (22) for an electrical vehicle;
send the charging request (22) to the EMS (10) for control of charging of a Battery Energy Storage System, BESS, (34) to a desired charge level based on the charging request (22).

17. The CPMS (20) according to claim 16, wherein the charging request (22) comprises a desired power level, a requested green energy level and/or a requested time for charging of an electrical vehicle.

18. The CPMS (20) according to any one of claims 16-17, wherein the energy availability information (12) comprises information of available power for electrical vehicle charging at one or more different points in time, and a level of green energy content in the available power at the one or more different points in time.

19. An electrical vehicle charging system (1) comprising an Energy Management System, EMS, (10) according to any one of claims 10-15, a Charge Point Management System, CPMS, (20) according to any one of claims 16-18, a Battery Energy Storage System, BESS, (34) and one or more electrical vehicle chargers (36) configured to be connected to an electrical vehicle for charging thereof.

20. A method of operating an electrical vehicle charging system (1) comprising an Energy Management System, EMS, (10) according to any one of claims 10-15, and a Charge Point Management System, CPMS, (20) according to any one of claims 16-18, the method comprising a method (100, 100') of operating the EMS (10) according to any one of claims 1-6, and a method (200) of operating the CPMS (20) according to any one of claims 7-9.
